# EUROPÄISCHE PATENTSCHRIFT

(11) **EP 4 104 654 B1**
(45) Veröffentlichungstag und Bekanntmachung des Hinweises auf die Patenterteilung: **14.08.2024**
(21) Anmeldenummer: 22401012.4
(22) Anmeldetag: 30.05.2022
(51) Int. Cl.: A01B 61/04, A01B 63/32

(54) **BODENBEARBEITUNGSGERÄT MIT HYDRAULISCHER ÜBERLASTSICHERUNG**
SOIL PREPARATION EQUIPMENT WITH HYDRAULIC OVERLOAD PROTECTION
APPAREIL DE TRAITEMENT DU SOL À PROTECTION HYDRAULIQUE CONTRE LES SURCHARGES

(30) Priorität: 07.06.2021 DE 102021114512
(43) Veröffentlichungstag der Anmeldung: 21.12.2022
(73) Patentinhaber: Amazonen-Werke H. Dreyer SE & Co. KG, 49205 Hasbergen (DE)
(72) Erfinder: Schwope, Reinhard, 06258 Schkopau / OT Wallendorf (DE); Polster, Joachim, 04657 Narsdorf (DE); Scherf, Silvio, 39444 Hecklingen OT Cochstedt (DE)

(56) Entgegenhaltungen:
- DD-A2- 135 438
- US-A1- 2008 093 093
- US-A1- 2018 228 072

## Beschreibung

Die Erfindung betrifft ein Bodenbearbeitungsgerät gemäß dem Oberbegriff des Patentanspruches 1 und ein Verfahren zum Lockern und Schneiden landwirtschaftlicher Böden gemäß Patentanspruch 10.

Ein derartiges Bodenbearbeitungsgerät ist in DD 1 35 438 A2 beschrieben, wobei das Gerät als Pflug mit als Pflugscharen ausgebildeten Arbeitselementen ausgeführt ist.

Die US 2008/0093093 A1 offenbart ein Hydrauliksystem für ein Bodenbearbeitungsgerät mit Zinken, welche in der Arbeitsstellung entgegen einer Kraft ausweichbar gehalten werden und sich fernbetätigt in eine angehobene Schutzposition verbringen lassen..

Ein weiteres Bodenbearbeitungsgerät ist in DE 42 18 750 A1 beschrieben. Dieses Bodenbearbeitungsgerät ist als Schwenkpflug ausgeführt und weist als Pflugkörper bezeichnete Arbeitselemente zum Lockern oder Schneiden landwirtschaftlicher Böden auf. Die Arbeitselemente sind in mehreren Reihen hintereinander beabstandet und über zumindest eine Querachse vertikal schwenkbar an einem Rahmen angeordnet. Den Arbeitselementen ist jeweils eine als Hydraulikzylinder ausgeführte Überlastsicherung zugeordnet, so dass diese beim Auftreffen auf Hindernisse entgegen der Fahrtrichtung gegen die Kraft der Überlastsicherung in eine angehobene Schutzposition ausweichen können. Trifft ein Arbeitselement auf ein Hindernis, schwenkt dieses entgegen der Kraft der Überlastsicherung um die Querachse am Rahmen nach oben, um das Hindernis zu überwinden. Anschließend wird das Arbeitselement von der Kraft der Überlastsicherung in seine ursprüngliche Arbeitsposition zurückgeführt. Damit die als Hydraulikzylinder ausgeführten Überlastsicherungen ihre Kraft aufbringen können ist ihnen auf einer ersten Kolbenfläche ein Hydraulikspeicher zugeordnet. Der Hydraulikspeicher steht in Fluidverbindung zu der die Arbeitselemente in Abwärtsrichtung belastenden ersten Kolbenfläche der Hydraulikzylinder und bestimmt durch seinen Systemdruck die Auslösekraft der Überlastsicherungen. Überdies sind als Grubber ausgeführte Bodenbearbeitungsgeräte mit derartigen Überlastsicherungen für als Grubberzinken ausgebildete Arbeitselemente bekannt. Die Arbeitselemente sind bei diesen Bodenbearbeitungsgeräten nebeneinander und in einer oder mehreren Reihen hintereinander beabstandet an dem Rahmen angeordnet.

Nachteilig bei diesen Bodenbearbeitungsgeräten ist, dass allen Arbeitselementen deren als Hydraulikzylinder ausgeführte Überlastsicherungen mit dem gleichen Hydraulikspeicher in Fluidverbindung stehen die gleiche Auslösekraft aufgeprägt wird. Dies ist dadurch bedingt, dass die Auslösekraft maßgeblich von dem Systemdruck des Hydraulikspeichers abhängt. Da ein beträchtlicher Teil der Auslösekraft durch die Widerstandskraft des Bodens auf das Arbeitselement aufgeprägt wird, welche im Wesentlichen von der Art und Verdichtung des Bodens abhängt, kann es vorkommen, dass Überlastsicherungen nicht wie gewünscht, also zu früh oder zu spät, auslösen. Ferner sind systembedingt alle Arbeitselemente in ihrer abgesenkten Arbeitsposition entgegen der Kraft der Überlastsicherung ausweichbar am Rahmen gehalten.

Die der Erfindung zugrundeliegende Aufgabe besteht somit darin, ein Bodenbearbeitungsgerät mit einer verbesserten Einstellmöglichkeit für die Überlastsicherungen zu schaffen. Zudem soll eine Steuerung für zumindest ein Arbeitselement bzw. eine Überlastsicherung, insbesondere eine Gruppe von Arbeitselementen bzw. Gruppe von Überlastsicherungen, geschaffen werden. Weiterhin soll ein Verfahren zum Lockern oder Schneiden landwirtschaftlicher Böden mittels eines, insbesondere solchen, Bodenbearbeitungsgerätes zur Verfügung gestellt werden, bei welchem die im Stand der Technik bekannten Nachteile zumindest weitgehend überwunden werden können.

Diese Aufgaben werden durch ein Bodenbearbeitungsgerät zum Lockern oder Schneiden landwirtschaftlicher Böden mit den Merkmalen des Anspruchs 1 und durch ein Verfahren mit den Merkmalen des Anspruchs 8 gelöst. Weitere vorteilhafte Ausführungsformen sind Gegenstand der abhängigen Ansprüche.

Die vorliegende Erfindung betrifft ein Bodenbearbeitungsgerät mit Arbeitselementen zum Lockern oder Schneiden landwirtschaftlicher Böden. Das Bodenbearbeitungsgerät ist ein Grubber, wobei die Arbeitselemente als Grubberzinken ausgeführt sind. Die Arbeitselemente sind quer zur Fahrtrichtung des Bodenbearbeitungsgerätes nebeneinander und in einer oder mehreren Reihen hintereinander beabstandet an einem Rahmen angeordnet. Die Arbeitselemente sind über zumindest eine Querachse vertikal schwenkbar am Rahmen angeordnet und können beim Auftreffen auf Hindernissen entgegen der Fahrtrichtung gegen die Kraft jeweils einer Überlastsicherung in eine angehobene Schutzposition ausweichen. Die Überlastsicherung wirkt zwischen dem Arbeitselement und dem Rahmen und hält dieses um die Querachse ausweichbar in seiner Arbeitsstellung. Die Überlastsicherungen sind jeweils als Hydraulikzylinder ausgeführt. Zumindest einer ersten Kolbenfläche der Hydraulikzylinder ist zumindest ein Hydraulikspeicher zugeordnet, um die Kraft auf das Arbeitselement, also die Auslösekraft der Überlastsicherung, auszüben.

Es ist eine hydraulische Steuervorrichtung vorgesehen, die dazu eingerichtet ist, eine zweite, der ersten Kolbenfläche gegenüberliegende Kolbenfläche zumindest eines Hydraulikzylinders mit unter Druck stehendem Hydraulikfluid zu beaufschlagen. Das diesem Hydraulikzylinder zugeordnete Arbeitselement kann so in die angehobene Schutzposition verbracht werden. Die hydraulische Steuervorrichtung ist von dem Bodenbearbeitungsgerät umfasst und kann Teil zumindest eines vorhandenen Hydraulikkreislaufs sein. Die hydraulische Steuervorrichtung kann zumindest ein steuerbares Ventil aufweisen. Durch Beaufschlagung der zweiten Kolbenfläche mit unter Druck stehendem Hydraulikfluid wird der Kraft entgegengewirkt, welche das Arbeitselement in seiner Arbeitsstellung hält, wodurch die Auslösekraft dieser Überlastsicherung sinkt. Die Einstellmöglichkeit zumindest einer Überlastsicherung ist somit verbessert. Die Auslösekraft kann somit an die Verdichtung und Beschaffenheit des Bodens angepasst werden. Übersteigt die von der Steuervorrichtung über die zweite Kolbenfläche aufgeprägte Kraft die aus der Fluidverbindung mit dem Hydraulikspeicher resultierende Kraft auf die erste Kolbenfläche, wird das Arbeitselement in seine angehobene Schutzposition verbracht. Das Arbeitselement wird also vertikal um die Querachse nach oben geschwenkt und kann dort gehalten werden. Das Bodenbearbeitungsgerät kann einen Hydraulikanschluss für unter Druck stehendes Hydraulikfluid aufweisen.

In einer vorteilhaften Weiterbildung des erfindungsgemäßen Bodenbearbeitungsgerätes ist die Steuervorrichtung dazu eingerichtet, eine Fluidverbindung zwischen dem Hydraulikspeicher und der ersten Kolbenfläche des Hydraulikzylinders oder der Hydraulikzylinder, dessen zweite Kolbenfläche oder Kolbenflächen mit Hydraulikfluid beaufschlagbar ist oder sind, zumindest zeitweise zu unterbrechen. Durch die Unterbrechung der Fluidverbindung zum Hydraulikspeicher wird die Kraft der Überlastsicherung aufgehoben, so dass das Arbeitselement mit verringerter Leistung in die angehobene Schutzposition verbracht werden kann. Die Steuervorrichtung kann hierzu zumindest ein steuerbares Abschaltventil umfassen.

Eine weitere vorteilhafte Ausführungsform des erfindungsgemäßen Bodenbearbeitungsgerätes zeichnet sich aus durch eine erste Gruppe von Überlastsicherungen, die Hydraulikzylinder umfasst, welche auf der zweiten Kolbenfläche mittels der Steuervorrichtung mit Hydraulikfluid beaufschlagbar sind, und insbesondere bei denen mittels der Steuervorrichtung die Fluidverbindung zwischen der ersten Kolbenfläche und dem Hydraulikspeicher trennbar ist, und vorzugsweise eine zweite Gruppe von Überlastsicherungen, die Hydraulikzylinder umfasst, welche außer Wirkverbindung mit der Steuervorrichtung stehen. Die erste Gruppe umfasst zumindest eine Überlastsicherung. Ein Bodenbearbeitungsgerät kann Überlastsicherungen der ersten Gruppe und der zweiten Gruppe aufweisen. Vorzugsweise übersteigt die Anzahl der Überlastsicherungen der zweiten Gruppe die Anzahl der Überlastsicherungen der ersten Gruppe insbesondere um das Doppelte. Die Überlastsicherungen der zweiten Gruppe können Verwendung finden für Arbeitselemente deren Einstellbarkeit und/oder Steuerung von untergeordneter Bedeutung für die technische Funktion des Bodenbearbeitungsgerätes sind, um das Bodenbearbeitungsgerät kosteneffektiv zu gestalten. Die Überlastsicherungen der ersten Gruppe sind für Arbeitselemente vorgesehen für die eine Einstellmöglichkeit und/oder Steuerung angestrebt ist.

In einer vorteilhaften Weiterbildung der vorstehenden Ausführungsform des erfindungsgemäßen Bodenbearbeitungsgerätes ist vorgesehen, dass zumindest zwei quer zur Fahrtrichtung beabstandeten Arbeitselementen Überlastsicherungen der ersten Gruppe zugeordnet sind, so dass das Bodenbearbeitungsgerät mittels der Steuervorrichtung dazu eingerichtet ist, während des Lockern oder Schneidens landwirtschaftlicher Böden zwei quer zur Fahrtrichtung beabstandete im Wesentlichen unbearbeitete Bearbeitungsstreifen zu erzeugen. Die Arbeitselemente mit Überlastsicherungen der ersten Gruppe können während des Lockern oder Schneidens des Bodens in die angehobene Schutzposition verbracht werden, um unbearbeitete Bearbeitungsstreifen anzulegen, oder sich in Arbeitsposition befinden wenn keine unbearbeiteten Bearbeitungsstreifen gefordert sind. Die Arbeitselemente mit Überlastsicherungen der ersten Gruppe sind vorzugsweise so gewählt, dass sie im Bereich der Fahrspuren einer das Bodenbearbeitungsgerät über landwirtschaftliche Böden verbringenden Zugmaschine am Bodenbearbeitungsgerät angeordnet sind, so dass sogenannte Fahrgassen angelegt werden können. Diese Arbeitselemente mit Überlastsicherungen der ersten Gruppe können also am Bodenbearbeitungsgerät quer zur Fahrtrichtung einen Abstand zueinander aufweisen welcher zumindest annährend der Spurweite einer Zugmaschine entspricht. Die Arbeitselemente mit Überlastsicherungen der ersten Gruppe können zusätzlich in mehreren Reihen hintereinander beabstandet angeordnet sein, wobei diese Arbeitselemente quer zur Fahrtrichtung beabstandet in zumindest zwei Streifen in Fahrtrichtung zumindest annährend hintereinander angeordnet sind. Die in Fahrgassen befindlichen Fahrspuren können somit im Wesentlichen unbearbeitet bleiben, so dass diese in nachfolgenden Bearbeitungsgängen verbesserte Fahreigenschaften für eine Zugmaschine aufweisen. Ferner werden regelmäßig in den in Fahrgassen befindlichen Fahrspuren keine Nutzpflanzen angepflanzt, so dass der Boden nicht bearbeitet werden braucht und das Bodenbearbeitungsgerät bei der Bearbeitung derartiger Feldbereiche einen verringerten Zugkraftbedarf aufweist.

Das erfindungsgemäße Bodenbearbeitungsgerät ist ferner vorteilhaft dadurch weitergebildet, dass der Rahmen ein Mittelteil und zumindest zwei mittels Scharnieren mit in Fahrtrichtung verlaufenden Schwenkachsen am Mittelteil angeordnete Seitenteile umfasst, wobei den am Mittelteil des Rahmens angeordneten Arbeitselementen Überlastsicherungen der ersten Gruppe zugeordnet sind und vorzugsweise den an den Seitenteilen angeordneten Arbeitselementen Überlastsicherungen der zweiten Gruppe zugeordnet sind. Das Bodenbearbeitungsgerät ist somit dazu eingerichtet, zumindest die an dem Mittelteil angeordneten Arbeitselemente mittels der Steuervorrichtung in die angehobene Schutzposition zu verbringen, so dass bspw. während der Transportfahrt eine erhöhte Bodenfreiheit gegeben ist oder das Bodenbearbeitungsgerät abgesenkt werden kann, um eine zulässige Transporthöhe von vorzugsweise 4m einzuhalten. Alternativ können den an den Seitenteilen angeordneten Arbeitselementen ebenfalls Überlastsicherungen der ersten Gruppe zugeordnet sein, so dass das Bodenbearbeitungsgerät in der Transportposition mit zumindest annährend in eine aufrechte Position heraufgeschwenkten Seitenteilen eine verringerte Transportbreite aufweist, wenn die an den Seitenteilen angeordneten Arbeitselemente ebenfalls mittels der Steuervorrichtung in die angehobene Schutzposition verbracht sind. Das erfindungsgemäße Bodenbearbeitungsgeräte weist zumindest eine

hydraulisch aktivierte Funktion, ein hydraulisch verschwenkbar am Rahmen angelenktes Fahrwerk, auf, wobei die hydraulisch aktivierte Funktion derart verschaltet ist, dass bei Betätigung der Funktion der zumindest eine Hydraulikspeicher und/oder die Steuervorrichtung mit unter Druck stehendem Hydraulikfluid beaufschlagt ist oder sind. Das Bodenbearbeitungsgerät kann über eine als Fahrwerk ausgeführte hydraulisch aktivierte Funktion ausgehoben und abgesenkt werden, so dass die Arbeitselemente je nach Stellung des Fahrwerks außer Eingriff oder in Eingriff mit dem Boden geraten. Die am Rahmen angeordneten Arbeitselemente und das Fahrwerk führen bei Betätigung des Fahrwerks gegensätzliche Bewegungen aus. Das heißt, durch Absenken des Fahrwerks werden der Rahmen respektive die Arbeitselemente ausgehoben und durch Ausheben des Fahrwerks werden der Rahmen respektive die Arbeitselemente abgesenkt. Das Fahrwerk kann in Bodenkontakt sein wenn die Arbeitselemente im Bodeneingriff sind, um das Bodenbearbeitungsgerät in der Tiefe zu führen.

Das Bodenbearbeitungsgerät kann am Ende einer Bearbeitungsspur mit Hilfe des Fahrwerks und/oder der Überlastsicherungen der ersten Gruppe in eine Zwischenposition verbracht werden, in der die Arbeitselemente nicht in Bodeneingriff sind, um das Bodenbearbeitungsgerät zu wenden.

Bei dem erfindungsgemäßen Bodenbearbeitungsgerät ist das Fahrwerk derart mit dem zumindest einen Hydraulikspeicher verschaltet, dass der Hydraulikspeicher durch Absenken des Fahrwerks geladen wird. Bei Vorhandensein mehrerer Hydraulikspeicher können diese simultan geladen werden. In diesem Zusammenhang ist von Laden eines Hydraulikspeichers die Rede, wenn der Hydraulikspeicher und vorzugsweise die fluidleitend mit dem Hydraulikspeicher verbundenen ersten Kolbenflächen in ausreichender Menge mit unter Druck stehendem Hydraulikfluid beaufschlagt werden, um den gewünschten Systemdruck einzustellen. Auf diese Weise können ausgelöste Überlastsicherung und/oder der zumindest eine Hydraulikspeicher besonders einfach wieder mit Hydraulikfluid versorgt werden, so dass immer eine voreingestellte Auslösekraft an den Arbeitselementen anliegt. Durch Absenken des Fahrwerks werden die Arbeitselemente ausgehoben, so dass das Laden des Hydraulikspeichers nicht gegen die Kraft des vom Boden auf die Arbeitselemente wirkenden Widerstands erfolgt. Diese Verschaltung ist somit besonders effizient.

Das erfindungsgemäße Bodenbearbeitungsgerät ist ferner vorteilhaft dadurch weitergebildet, dass das Fahrwerk derart mit der Steuervorrichtung verschaltet ist, dass der Steuervorrichtung durch Ausheben des Fahrwerks unter Druck stehendes Hydraulikfluid zur Verfügung steht. Durch Ausheben des Fahrwerks wird der Rahmen abgesenkt, so dass der Steuervorrichtung unter Druck stehendes Hydraulikfluid zur Verfügung steht bevor und/oder während die Arbeitselemente in Bodeneingriff geraten. In zweckmäßiger Weise können somit Arbeitselemente die zumindest temporär nicht zur Bodenbearbeitung vorgesehen sind mittels der Steuervorrichtung in die angehobene Schutzposition verbracht werden und es ergibt sich eine effiziente Verschaltung.

In einer weiteren vorteilhaften Weiterbildung des erfindungsgemäßen Bodenbearbeitungsgerätes umfassen eine Mehrzahl von Überlastsicherungen, insbesondere alle Überlastsicherungen der ersten Gruppe, vorzugsweise alle Überlastsicherungen, ein Schaltventil, welches dazu eingerichtet ist den jeweiligen Hydraulikzylinder fluidleitend mit der Steuervorrichtung zu verbinden und/oder von der Steuervorrichtung zu trennen. Die Schaltventile können separat schaltbar sein, so dass mehrere Arbeitselemente, insbesondere die Arbeitselemente denen Überlastsicherungen der ersten Gruppe, vorzugsweise alle Arbeitselemente, einzeln ansteuerbar sind. Arbeitselemente deren Überlastsicherungen mit einem Schaltventil versehen sind können bei Bedarf separat mittels der Steuervorrichtung in die angehobene Schutzposition verbracht werden. Infolge dieser Weiterbildung ist das Bodenbearbeitungsgerät dazu eingerichtet eine sogenannte Section-Control-Funktionalität umzusetzen. Das heißt, das Bodenbearbeitungsgerät ist dazu eingerichtet, keilförmige Flächenabschnitte mittels der Arbeitselemente zu bearbeiten, wobei Arbeitselemente innerhalb des Flächenabschnittes in ihrer Arbeitsposition gegen die Kraft der Überlastsicherung ausweichbar gehalten werden und Arbeitselemente, welche den Flächenabschnitt verlassen, in die angehobene Schutzposition verbracht werden.

Die der Erfindung zugrundeliegende Aufgabe wird ferner durch ein Verfahren der eingangs genannten Art gelöst, wobei das Verfahren mittels eines Bodenbearbeitungsgerätes, insbesondere nach einer der vorstehenden Ausführungsformen, ausgeführt wird und gekennzeichnet ist durch den Schritt Verbringen zumindest eines Arbeitselementes in eine angehobene Schutzposition mittels einer hydraulischen Steuervorrichtung, die eine als Hydraulikzylinder ausgeführte Überlastsicherung, welche das Arbeitselement entgegen einer Kraft um eine Querachse vertikal schwenkbar an einem Rahmen ausweichbar hält, des Arbeitselementes auf einer zweiten Kolbenfläche mit Hydraulikfluid beaufschlagt. Hinsichtlich der Vorteile und Modifikationen des erfindungsgemäßen Verfahrens wird zunächst auf die Vorteile und Modifikationen des erfindungsgemäßen Bodenbearbeitungsgerätes verwiesen.

In einer bevorzugten Ausführungsform des erfindungsgemäßen Verfahrens werden zwei quer zur Fahrtrichtung beabstandete im Wesentlichen unbearbeitete Bearbeitungsstreifen erzeugt und/oder eine Mehrzahl von Arbeitselementen in die angehobene Schutzposition verbracht, vorzugsweise während einer Transportfahrt und/oder eines Wendevorganges. Die zwei quer zur Fahrtrichtung beabstandeten im Wesentlichen unbearbeiteten Bearbeitungsstreifen werden vorzugsweise erzeugt indem eine Mehrzahl von Arbeitselementen in die angehobene Schutzposition verbracht wird. In Fahrtrichtung rechts und/oder links der im Wesentlichen unbearbeiteten Bearbeitungsstreifen können Arbeitselemente an dem Rahmen des Bodenbearbeitungsgerätes angeordnet sein, so dass rechts und/oder links des im Wesentlichen unbearbeiteten Bearbeitungsstreifens der Boden bearbeitet werden kann. Vorzugsweise wird der Boden rechts und/oder links der im Wesentlichen unbearbeiteten Bearbeitungsstreifen bearbeitet, so dass die im Wesentlichen unbearbeiteten Bearbeitungsstreifen in einer einzigen Überfahrt erzeugt werden können.

In einer weiteren bevorzugten Ausführungsform des erfindungsgemäßen Verfahrens wird landwirtschaftlicher Boden bearbeitet während zumindest ein Arbeitselement zumindest zeitweise, vorzugsweise dauerhaft, sich in der angehobenen Schutzposition befindet. Besonders vorzugsweise sind zumindest zwei Arbeitselemente zumindest zeitweise, insbesondere dauerhaft, in der angehobenen Schutzposition gehalten.

Weitere Einzelheiten der Erfindung sind der Beispielsbeschreibung und den Zeichnungen zu entnehmen. Die Zeichnungen zeigen
- Fig.1: ein erfindungsgemäßes, als Grubber ausgeführtes Bodenbearbeitungsgerät in einer Transportposition in Seitenansicht,
- Fig.2: ein als Grubberzinken ausgeführtes Arbeitselement in einer Arbeitsposition in isolierter Ansicht von der Seite,
- Fig.3: der Grubberzinken gemäß Fig.2 in einer angehobenen Schutzposition in Seitenansicht,
- Fig.4: der Grubber in einer Arbeitsposition in Draufsicht,
- Fig.5: ein Schaltplan des Grubbers in der Arbeitsposition gemäß Fig.4, und
- Fig.6: ein Schaltplan des Grubbers in der Transportposition gemäß Fig.1.

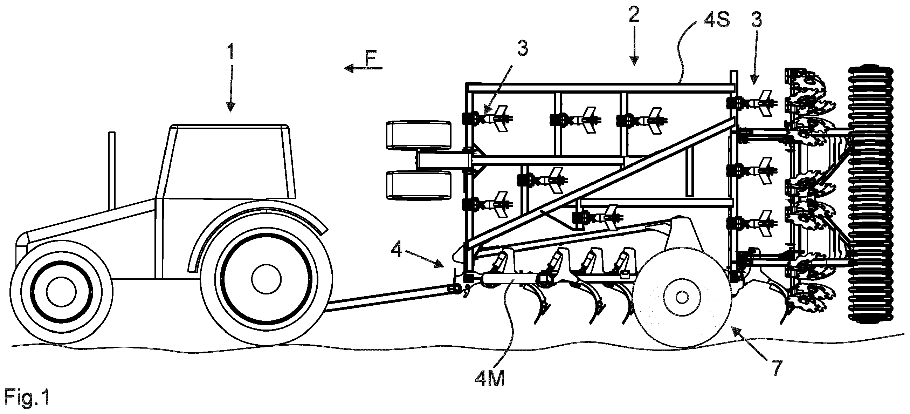

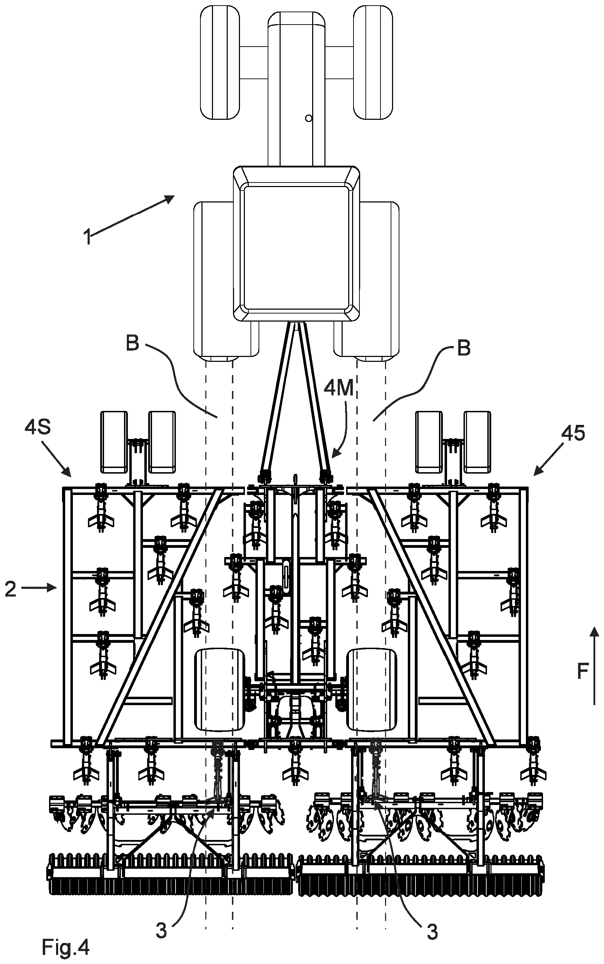

Ein hinter einer Zugmaschine 1 angehangenes, als Grubber 2 ausgeführtes Bodenbearbeitungsgerät ist in Fig.1 in einer Transportposition zu sehen. Dieser Grubber 2 weist als Grubberzinken 3 ausgeführte Arbeitselemente zum Lockern und Schneiden landwirtschaftlicher Böden auf. Die Grubberzinken 3 sind quer zur Fahrtrichtung F nebeneinander und in mehreren Reihen hintereinander beabstandet an einem Rahmen 4 angeordnet. Der Rahmen 4 umfasst ein Mittelteil 4M und zwei mittels Scharnieren mit in Fahrtrichtung F verlaufenden Schwenkachsen am Mittelteil 4M angeordnete Seitenteile 4S, wobei in Fig.1 nur das Mittelteil 4M und vordere der zwei Seitenteile 4S zu sehen ist. Da die Seitenteile 4S in der gezeigten Transportposition am Mittelteil 4M nach oben geschwenkt sind, überdecken sich die Seitenteile 4S gegenseitig. Der Grubber 2 umfasst in den Figuren nicht näher dargestellte Aktoren um die Seitenteile 4S aus der in Fig.1 gezeigten Transportposition in eine Arbeitsposition, wie in Fig.4 zu sehen, zu verbringen. Die Seitenteile 4S werden hierzu mit Hilfe der Aktoren und Scharniere am Mittelteil 4M herabgeschwenkt, so dass sich das Mittelteil 4M und die Seitenteile 4S zumindest annährend in einer horizontalen Ebene befinden, wie allgemein für die Arbeitsposition derartiger Grubber 2 bekannt.

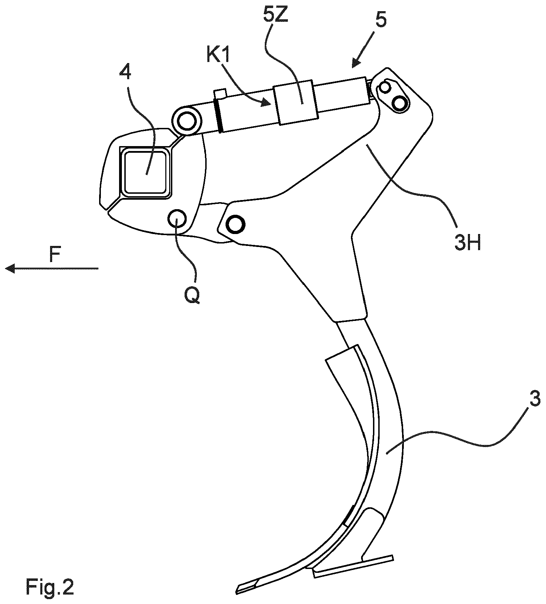

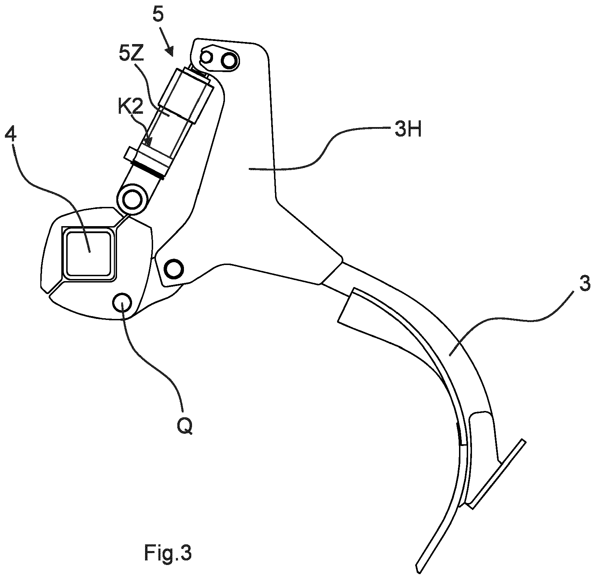

Die Grubberzinken 3 sind über jeweils eine Querachse Q vertikal schwenkbar am Rahmen 4 angeordnet und hängen von diesem herab. Beim Auftreffen auf Hindernissen können die Grubberzinken 3 aus der in Fig.2 gezeigten Arbeitsposition entgegen der Fahrtrichtung F gegen die Kraft jeweils einer Überlastsicherung 5 in eine angehobene Schutzposition ausweichen, wie in Fig.3 gezeigt. Die Überlastsicherungen 5 sind im Wesentlichen als Hydraulikzylinder 5Z ausgeführt. Einer ersten Kolbenfläche K1 der Hydraulikzylinder 5Z, nämlich den die Grubberzinken 3 in der Arbeitsposition haltenden Kolbenflächen K1, ist ein Hydraulikspeicher 6 zugeordnet. Diese Fluidverbindung der Hydraulikzylinder 5Z zum Hydraulikspeicher 6 sorgt für die Kraft entgegen der die Grubberzinken 3 die angehobene Schutzposition einnehmen können. Der Hydraulikzylinder 5Z eines jeden Grubberzinkens 3 ist im Abstand zur Querachse Q zwischen dem Rahmen 4 und einem mit dem Grubberzinken 3 gekoppelten Hebelarm 3H angeordnet.

Durch den Hub des Hydraulikzylinders 5Z kann der jeweilige Grubberzinken somit um die Querachse Q am Rahmen 4 verschwenkt werden.

Es ist eine hydraulische Steuervorrichtung vorgesehen, die dazu eingerichtet ist, eine zweite, der ersten Kolbenfläche K1 gegenüberliegende Kolbenfläche K2 einer Mehrzahl von Hydraulikzylindern 5Z mit unter Druck stehendem Hydraulikfluid zu beaufschlagen. Die Steuervorrichtung kann hierzu entsprechende Ventile aufweisen. Durch Beaufschlagung der zweiten Kolbenfläche K2 eines Hydraulikzylinders 5Z kann der diesem Hydraulikzylinder 5Z zugeordnete Grubberzinken 3 in die angehobene Schutzposition verbracht werden. Mittels der hydraulischen Steuervorrichtung kann die die Grubberzinken 3 in der Arbeitsposition haltende Kraft somit verringert oder sogar überwunden werden, um den jeweiligen Grubberzinken 3 um die Querachse Q nach oben zu schwenken und dort zu halten.

Der Grubber 2 weist ferner eine als hydraulisch verschwenkbar am Rahmen 4, nämlich am Mittelteil 4M, angelenktes Fahrwerk 7 ausgeführte hydraulisch aktivierte Funktion auf. Das Fahrwerk 7 weist zwei Fahrwerksräder auf über die sich der Grubber 2 in der Transportposition auf dem Boden abstützt. Das Fahrwerk 7 umfasst zwei hydraulische Aktoren 7Z mittels derer die Fahrwerksräder angehoben und abgesenkt werden können. Der Grubber 2 kann somit über das Fahrwerk 7 ausgehoben werden, um die Grubberzinken 3 außer Bodeneingriff zu bringen, und abgesenkt werden, um Arbeit zu verrichten. In der Transportposition gemäß Fig.1 ist das Fahrwerk 7 abgesenkt, so dass der Grubber 2 ausgehoben ist. Das Fahrwerk 7 und der Grubber 2 führen somit gegensätzliche Bewegungen aus.

Um energieeffizient zu arbeiten, ist die Steuervorrichtung dazu eingerichtet, eine Fluidverbindung zwischen dem Hydraulikspeicher und der ersten Kolbenfläche K1 der Hydraulikzylinder 5Z, dessen zweite Kolbenfläche K2 mit Hydraulikfluid beaufschlagbar sind zumindest zeitweise zu unterbrechen. Durch diese Maßnahme kann die hydraulische Vorspannung derer Hydraulikzylinder 5Z deaktiviert werden, welche von der Steuervorrichtung mittels unter Druck stehendem Hydraulikfluid in die angehobene Schutzposition zu verbringen sind. Die Steuervorrichtung kann hierzu zumindest ein schaltbares Ventil umfassen.

Die Überlastsicherungen 5 des Grubbers 2 sind unterteilt in eine erste Gruppe G1, welche Hydraulikzylinder 5Z umfasst, die auf der zweiten Kolbenfläche K2 mittels der Steuervorrichtung mit Hydraulikfluid beaufschlagbar sind und bei denen mittels der Steuervorrichtung die Fluidverbindung zwischen der ersten Kolbenfläche K1 und dem Hydraulikspeicher 6 trennbar ist, und eine zweite Gruppe G2 von Überlastsicherungen 5, die Hydraulikzylinder 5Z umfasst, welche außer Wirkverbindung mit der Steuervorrichtung stehen. Bei diesem Grubber 2 sind den am Mittelteil 4M angeordneten Grubberzinken 3 Überlastsicherungen 5 der ersten Gruppe G1 zugeordnet, so dass die Grubberzinken 3 am Mitteilteil 4M wahlweise in ihre angehobene Schutzposition verbringbar sind. Den an den Seitenteilen 4S angeordneten Grubberzinken 3 sind Überlastsicherungen 5 der zweiten Gruppe G2 zugeordnet. Es ist somit ermöglicht, dass in der Transportposition des Grubbers 2 die Grubberzinken 3 am Mittelteil 4M in die angehobene Schutzposition verbracht werden, wie in Fig.1 gezeigt. Der Grubber 2 weist somit in der Transportposition eine erhöhte Bodenfreiheit auf bzw. kann mittels des Fahrwerks 7 in einer teilweise abgesenkten Position gefahren werden, so dass die Transporthöhe reduziert ist.

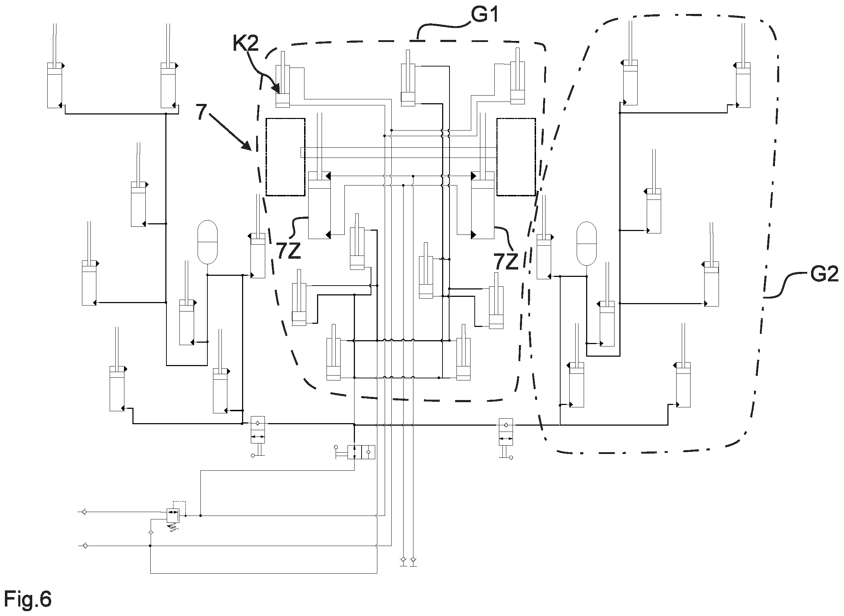

Fig.6 zeigt den zu Fig.1 korrespondierenden Schaltplan des Grubbers 2 in Transportposition. Die Hydraulikzylinder 5Z der am Mittelteil 4M angeordneten Grubberzinken 3 der ersten Gruppe G1 befinden sich in der angehobenen Schutzposition. Hierzu wurden die zweiten Kolbenflächen K2 mit unter Druck stehendem Hydraulikfluid beaufschlagt. Die an den Seitenteilen 4S angeordneten Grubberzinken 3 befinden sich in Arbeitsposition wenngleich die Seitenteile 4S am Mittelteil 4M nach oben geschwenkt wurden, denn diesen Grubberzinken sind Überlastsicherungen der zweiten Gruppe G2 zugeordnet. Das Fahrwerk 7 befindet sich in seiner abgesenkten Position in der die Aktoren 7Z ausgefahren sind. Der Grubber 2 ist somit ausgehoben.

In Fig.4 ist der Grubber 2 in Arbeitsposition zu sehen. Zur Veranschaulichung sind die Grubberzinken 3 abgebildet, wenngleich sie in der Arbeitsposition sich normalerweise im Boden befinden und somit nicht zu sehen wären. Das Fahrwerk 7 befindet sich in der Arbeitsposition des Grubbers 2 nämlich in der angehobenen Position, so dass der Grubber 2 abgesenkt ist. Neben den am Mittelteil 4M angeordneten Grubberzinken 3 sind auch zwei Grubberzinken 3 der in Fahrtrichtung hintersten Reihe Überlastsicherungen 5 der ersten Gruppe G1 zugeordnet. Diese Grubberzinken 3 sind quer zur Fahrtrichtung F beabstandet zueinander am Rahmen 4 angeordnet und befinden sich in dieser gezeigten Arbeitsposition in der angehobenen Schutzposition. Der Grubber 2 ist somit mittels der Steuervorrichtung dazu eingerichtet, während des Lockern und Schneidens landwirtschaftlicher Böden zwei quer zur Fahrtrichtung F beabstandete im Wesentlichen unbearbeitete Bearbeitungsstreifen B zu erzeugen. Die beiden in dieser Arbeitsposition des Grubbers 2 in der ausgehobenen Schutzposition befindlichen Grubberzinken 3 sind derart quer zu Fahrtrichtung F beabstandet am Rahmen 4 angeordnet, dass die unbearbeiteten Bearbeitungsstreifen B im Bereich der Reifen der den Grubber 2 ziehenden Zugmaschine angelegt werden. Diese Fahrspuren bleiben somit im Wesentlichen unbearbeitet und bieten für spätere Bearbeitungsgänge verbesserte Fahreigenschaften für die Zugmaschine 1. In einer nicht gezeigten Arbeitsposition des Grubbers 2 sind auch diese beiden Grubberzinken 3 aus der angehobenen Schutzposition in die Arbeitsposition herabgeschwenkt, wie die übrigen Grubberzinken 3, so dass keine unbearbeiteten Bearbeitungsstreifen B angelegt werden.

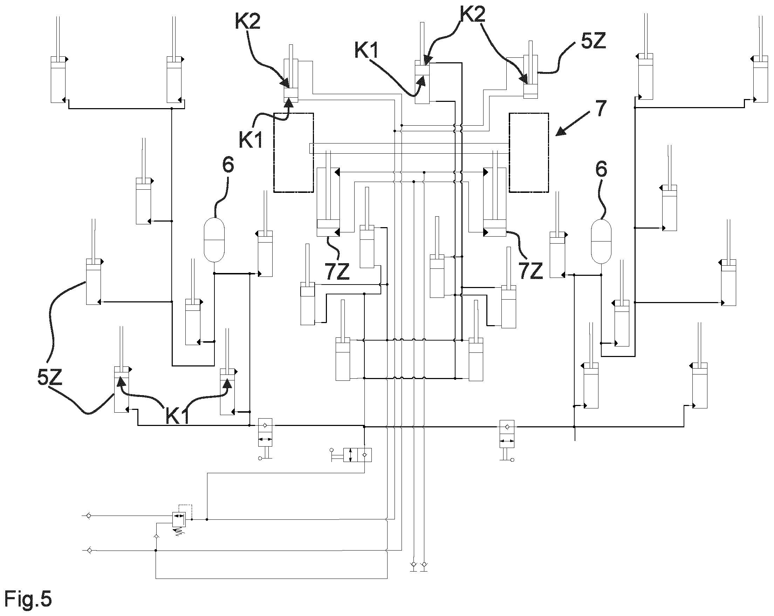

In Fig.5 ist der zu der Arbeitsposition des Grubbers 2 gemäß Fig.4 korrespondiere Schaltplan zu sehen. Mit Ausnahme der hinter dem Fahrwerk 7 angeordneten Überlastsicherungen 5 befinden sich alle Hydraulikzylinder 5Z in der ausgefahrenen Position, der zugeordnete Grubberzinken 3 also in der Arbeitsposition, wobei den ersten Kolbenflächen K1 ein Hydraulikspeicher 6 zugeordnet ist. Die Hydraulikzylinder 5Z der in der angehobenen Schutzposition befindlichen Grubberzinken 3 hinter dem Fahrwerk 7 befinden sich in der eingefahrenen Position, da die zweiten Kolbenflächen K2 von der Steuervorrichtung beaufschlagt wurden.

Das Fahrwerk 7, also die hydraulisch aktivierte Funktion des Grubbers 2, ist derart verschaltet, dass, je nachdem in welcher Richtung das Fahrwerk 7 betätigt wird, die Hydraulikspeicher 6 oder die Steuervorrichtung mit unter Druck stehendem Hydraulikfluid beaufschlagt werden. Die Hydraulikspeicher 6 und die Steuervorrichtung sind also mit dem Fahrwerk 7 verschaltet.

Das Fahrwerk 7 ist derart mit dem den Hydraulikspeichern 6 verschaltet, dass die Hydraulikspeicher 6 durch Absenken des Fahrwerks 7 geladen werden können. Eventuell in der Arbeitsposition ausgelöste Überlastsicherungen 5 können somit während der Wende am Vorgewende, wo der Grubber 2 auf dem Fahrwerk abgestützt ist, wieder über die Hydraulikspeicher 6 geladen werden. Mit der Steuervorrichtung ist das Fahrwerk 7 bzw. die Aktoren 7Z derart verschaltet, dass der Steuervorrichtung durch Ausheben des Fahrwerks 7 unter Druck stehendes Hydraulikfluid zur Verfügung steht. Nicht zur Bearbeitung des Boden vorgesehene Grubberzinken 3 können somit während des Einsetzen des Grubbers 2 in ihre angehobene Schutzposition verbracht werden, bspw. um unbearbeitete Bearbeitungsspuren B anzulegen.

In einer nicht gezeigten Ausführungsform umfassen eine Mehrzahl von Überlastsicherungen 5, insbesondere alle Überlastsicherungen 5 der ersten Gruppe G1, vorzugsweise sämtliche Überlastsicherungen 5, ein Schaltventil, welches dazu eingerichtet ist den jeweiligen Hydraulikzylinder 5Z fluidleitend mit der Steuervorrichtung zu verbinden und/oder von der Steuervorrichtung zu trennen. Grubberzinken 3 deren Überlastsicherung 5 mit einem Schaltventil ausgestattet ist können somit in schaltbarer Weise in die angehobene Schutzposition verbracht werden.

Die Verwendung des vorbeschriebenen Grubbers 2 zum Lockern oder Schneiden landwirtschaftlicher Böden zeichnet sich dadurch aus, dass zumindest ein als Grubberzinken 3 ausgeführtes Arbeitselement mittels der hydraulischen Steuervorrichtung, die eine als Hydraulikzylinder 5Z ausgeführte Überlastsicherung 5, welche den Grubberzinken 3 entgegen einer Kraft um die Querachse Q vertikal schwenkbar am Rahmen 4 ausweichbar hält, auf der zweiten Kolbenfläche K2 mit Hydraulikfluid beaufschlagt, in die angehobene Schutzposition verbracht wird. Dieser Schritt kann dazu genutzt werden zwei quer zur Fahrtrichtung F beabstandete Grubberzinken 3 während der Arbeit in die angehobene Schutzposition zu verbringen und so zwei quer zur Fahrtrichtung F beabstandete im Wesentlichen unbearbeitete Bearbeitungsstreifen B zu erzeugen. Diese Grubberzinken 3 befinden sich dann in der angehobenen Schutzposition während der landwirtschaftliche Boden bearbeitet wird. Wenn keine unbearbeiteten Bearbeitungsstreifen B angelegt werden sollen, können alle Grubberzinken 3 in die Arbeitsposition abgesenkt sein. Alternativ oder zusätzlich können während einer Transportfahrt oder eines Wendevorganges eine Mehrzahl von Grubberzinken 3 in die angehobene Schutzposition verbracht werden. Bei dem vorstehend beschriebenen Grubber 2 werden die Grubberzinken 3, welche am Mittelteil 4M angeordnet sind, während der Transportfahrt in die angehobene Schutzposition verbracht.

Bei einem nicht gezeigten Grubber 2 ist es denkbar, dass während des Wendevorganges alle Grubberzinken 3 in die angehobene Schutzposition verbracht werden, so dass dieser Grubber 2 eine erhöhte Bodenfreiheit beim Wenden aufweist.

### Bezugszeichenliste

- 1: Zugmaschine
- 2: Grubber
- 3: Grubberzinken
- 3H: Hebelarm
- F: Fahrtrichtung
- 4: Rahmen
- 4M: Mittelteil
- 4S: Seitenteil
- Q: Querachse
- 5: Überlastsicherung
- 5Z: Hydraulikzylinder
- K1: erste Kolbenfläche
- K2: zweite Kolbenfläche
- 6: Hydraulikspeicher
- G1: erste Gruppe
- G2: zweite Gruppe
- 7: Fahrwerk
- 7Z: Aktor
- B: Bearbeitungsstreifen

## Patentansprüche

1. Bodenbearbeitungsgerät (2), das als Grubber (2) ausgeführt ist, mit als Grubberzinken (3) ausgeführten Arbeitselementen (3) zum Lockern oder Schneiden landwirtschaftlicher Böden, wobei die Arbeitselemente (3) quer zur Fahrtrichtung (F) des Bodenbearbeitungsgerätes (2) nebeneinander und in einer oder mehreren Reihen hintereinander beabstandet an einem Rahmen (4) angeordnet sind, wobei die Arbeitselemente (3) über zumindest eine Querachse (Q) vertikal schwenkbar am Rahmen (4) angeordnet sind und beim Auftreffen auf Hindernissen entgegen der Fahrtrichtung (F) gegen die Kraft jeweils einer Überlastsicherung (5) in eine angehobene Schutzposition ausweichen können, wobei die Überlastsicherungen (5) als Hydraulikzylinder (5Z) ausgeführt sind und zumindest einer ersten Kolbenfläche (K1) der Hydraulikzylinder (5Z) zumindest ein Hydraulikspeicher (6) zugeordnet ist, wobei eine hydraulische Steuervorrichtung vorgesehen ist, die dazu eingerichtet ist, eine zweite, der ersten Kolbenfläche (K1) gegenüberliegende Kolbenfläche (K2) zumindest eines Hydraulikzylinders (5Z) mit unter Druck stehendem Hydraulikfluid zu beaufschlagen, um das diesem Hydraulikzylinder (5Z) zugeordnete Arbeitselement (3) in die angehobene Schutzposition zu verbringen, wobei das Bodenbearbeitungsgerät ein an dem Rahmen (4) hydraulisch verschwenkbar angelenktes Fahrwerk (7) aufweist, und wobei das Bodenbearbeitungsgerät (2) eine hydraulisch aktivierte Funkion umfasst wobei die hydraulisch aktivierte Funktion derart verschaltet ist, dass bei Betätigung der Funktion der zumindest eine Hydraulikspeicher (6) und/oder die Steuervorrichtung mit unter Druck stehendem Hydraulikfluid beaufschlagt sind, **dadurch gekennzeichnet, dass** das Fahrwerk (7) derart mit dem zumindest einen Hydraulikspeicher (6) verschaltet ist, dass der Hydraulikspeicher (6) durch Absenken des Fahrwerks (7) geladen wird.

2. Bodenbearbeitungsgerät (2) nach Anspruch 1, **dadurch gekennzeichnet, dass** die Steuervorrichtung dazu eingerichtet ist, eine Fluidverbindung zwischen dem Hydraulikspeicher (6) und der ersten Kolbenfläche (K1) des Hydraulikzylinders (5Z) oder der Hydraulikzylinder (5Z), dessen zweite Kolbenfläche (K2) oder Kolbenflächen (K2) mit Hydraulikfluid beaufschlagbar ist oder sind, zumindest zeitweise zu unterbrechen.

3. Bodenbearbeitungsgerät (2) nach Anspruch 1 oder 2, **gekennzeichnet durch** eine erste Gruppe (G1) von Überlastsicherungen (5), die Hydraulikzylinder (5Z) umfasst, welche auf der zweiten Kolbenfläche (K2) mittels der Steuervorrichtung mit Hydraulikfluid beaufschlagbar sind, und insbesondere bei denen mittels der Steuervorrichtung die Fluidverbindung zwischen der ersten Kolbenfläche (K1) und dem Hydraulikspeicher (6) trennbar ist, und vorzugsweise eine zweite Gruppe (G2) von Überlastsicherungen (5), die Hydraulikzylinder (5Z) umfasst, welche außer Wirkverbindung mit der Steuervorrichtung stehen.

4. Bodenbearbeitungsgerät (2) nach Anspruch 3, **dadurch gekennzeichnet, dass** zumindest zwei quer zur Fahrtrichtung (F) beabstandeten Arbeitswerkelementen (3) Überlastsicherungen (5) der ersten Gruppe (G1) zugeordnet sind, so dass das Bodenbearbeitungsgerät (2) mittels der Steuervorrichtung dazu eingerichtet ist, während des Lockern oder Schneidens landwirtschaftlicher Böden zwei quer zur Fahrtrichtung (F) beabstandete im Wesentlichen unbearbeitete Bearbeitungsstreifen (B) zu erzeugen.

5. Bodenbearbeitungsgerät (2) nach Anspruch 3 oder 4, **dadurch gekennzeichnet, dass** der Rahmen (4) ein Mittelteil (4M) und zumindest zwei mittels Scharnieren mit in Fahrtrichtung (F) verlaufenden Schwenkachsen am Mittelteil (4M) angeordnete Seitenteile (4S) umfasst, wobei den am Mittelteil (4M) des Rahmens (4) angeordneten Arbeitselementen (3) Überlastsicherungen (5) der ersten Gruppe (G1) zugeordnet sind und vorzugsweise den an den Seitenteilen (4S) angeordneten Arbeitselementen (3) Überlastsicherungen (5) der zweiten Gruppe (G2) zugeordnet sind.

6. Bodenbearbeitungsgerät (2) nach zumindest einem der vorstehenden Ansprüche, **dadurch gekennzeichnet, dass** das Fahrwerk (7) derart mit der Steuervorrichtung verschaltet ist, dass der Steuervorrichtung durch Ausheben des Fahrwerks (7) unter Druck stehendes Hydraulikfluid zur Verfügung steht.

7. Bodenbearbeitungsgerät (2) nach zumindest einem der vorstehenden Ansprüche, **dadurch gekennzeichnet, dass** eine Mehrzahl von Überlastsicherungen (5), insbesondere alle Überlastsicherungen (5) der ersten Gruppe (G1), vorzugsweise alle Überlastsicherungen (5), ein Schaltventil umfassen, welches dazu eingerichtet ist den jeweiligen Hydraulikzylinder (5Z) fluidleitend mit der Steuervorrichtung zu verbinden und/oder von der Steuervorrichtung zu trennen.

8. Verfahren zum Lockern oder Schneiden landwirtschaftlicher Böden mittels eines Bodenbearbeitungsgerätes (2) nach zumindest einem der Ansprüche 1 bis 7, **gekennzeichnet durch** den Schritt:
- Verbringen zumindest eines Arbeitselementes (3) in eine angehobene Schutzposition mittels einer hydraulischen Steuervorrichtung, die eine als Hydraulikzylinder (5Z) ausgeführte Überlastsicherung (5), welche das Arbeitselement (3) entgegen einer Kraft um eine Querachse (Q) vertikal schwenkbar am Rahmen (4) ausweichbar hält, des Arbeitselementes (3) auf einer zweiten Kolbenfläche (K2) mit Hydraulikfluid beaufschlagt.

9. Verfahren nach Anspruch 8, **gekennzeichnet durch**:
- Erzeugen zwei quer zur Fahrtrichtung (F) beabstandeter im Wesentlichen unbearbeiteter Bearbeitungsstreifen (B) und/oder
- Verbringen einer Mehrzahl von Arbeitselementen (3) in die angehobene Schutzposition, vorzugsweise während einer Transportfahrt und/oder eines Wendevorganges.

10. Verfahren nach Anspruch 8 oder 9, **gekennzeichnet durch** den Schritt:
- Bearbeiten landwirtschaftlicher Böden während zumindest ein Arbeitselement (3) zumindest zeitweise, vorzugsweise dauerhaft, sich in der angehobenen Schutzposition befindet.

## Claims

1. Soil-working device (2) which is designed as a cultivator (2), comprising working elements (3) designed as cultivator tines (3) for loosening or cutting agricultural soils, the working elements (3) being arranged on a frame (4) transversely to the direction of travel (F) of the soil-working device (2), next to one another and spaced one behind the other in one or more rows, the working elements (3) being arranged on the frame (4) so as to be vertically pivotable via at least one transverse pin (Q) and being able to move into a raised protection position against the force of an overload protection device (5) when encountering obstacles against the direction of travel (F), the overload protection devices (5) being designed as hydraulic cylinders (5Z) and at least one hydraulic accumulator (6) being associated with at least one first piston surface (K1) of the hydraulic cylinders (5Z), a hydraulic control apparatus being provided which is designed to supply a second piston surface (K2) of at least one hydraulic cylinder (5Z) opposite the first piston surface (K1) with pressurized hydraulic fluid to in order to bring the working element (3) associated with this hydraulic cylinder (5Z) into the raised protection position, the soil-working device having a chassis (7) which is hydraulically pivotably coupled to the frame (4), and the soil-working device (2) comprising a hydraulically activated function, the hydraulically activated function being connected in such a way that when the function is actuated, the at least one hydraulic accumulator (6) and/or the control apparatus are supplied with pressurized hydraulic fluid, **characterized in that** the chassis (7) is connected to the at least one hydraulic accumulator (6) in such a way that the hydraulic accumulator (6) is loaded by lowering the chassis (7).

2. Soil-working device (2) according to claim 1, **characterized in that** the control apparatus is designed to at least temporarily interrupt a fluid connection between the hydraulic accumulator (6) and the first piston surface (K1) of the hydraulic cylinder (5Z) or the hydraulic cylinders (5Z) of which the second piston surface (K2) or piston surfaces (K2) can be supplied with hydraulic fluid.

3. Soil-working device (2) according to either claim 1 or claim 2, **characterized by** a first group (G1) of overload protection devices (5) comprising hydraulic cylinders (5Z) which can be supplied on the second piston surface (K2) with hydraulic fluid by means of the control apparatus, and in particular in which the fluid connection between the first piston surface (K1) and the hydraulic accumulator (6) can be severed by means of the control apparatus, and preferably a second group (G2) of overload protection devices (5) comprising hydraulic cylinders (5Z) which are not operatively connected to the control apparatus.

4. Soil-working device (2) according to claim 3, **characterized in that** at least two working elements (3) spaced transversely to the direction of travel (F) are associated with overload protection devices (5) of the first group (G1), so that the soil-working device (2) is configured by means of the control apparatus to produce, during the loosening or cutting of agricultural soils, two substantially unworked processing strips (B) spaced transversely to the direction of travel (F).

5. Soil-working device (2) according to either claim 3 or claim 4, **characterized in that** the frame (4) comprises a central part (4M) and at least two side parts (4S) arranged on the central part (4M) by means of hinges with pivot axes running in the direction of travel (F), the working elements (3) arranged on the central part (4M) of the frame (4) being associated with overload protection devices (5) of the first group (G1) and preferably the working elements (3) arranged on the side parts (4S) being associated with overload protection devices (5) of the second group (G2).

6. Soil-working device (2) according to at least one of the preceding claims, **characterized in that** the chassis (7) is connected to the control apparatus in such a way that pressurized hydraulic fluid is available to the control apparatus by raising the chassis (7).

7. Soil-working device (2) according to at least one of the preceding claims, **characterized in that** a plurality of overload protection devices (5), in particular all overload protection devices (5) of the first group (G1), preferably all overload protection devices (5), comprise a switching valve which is designed to fluidically connect the relevant hydraulic cylinder (5Z) to the control apparatus and/or to separate it from the control apparatus.

8. Method for loosening or cutting agricultural soils by means of a soil-working device (2) according to at least one of claims 1 to 7, **characterized by** the following step:
- bringing at least one working element (3) into a raised protection position by means of a hydraulic control apparatus which supplies an overload protection device (5), which is designed as a hydraulic cylinder (5Z) and holds the working element (3) such that it can move away from the frame (4) and pivot vertically around a transverse pin (Q) against a force, of the working element (3) on a second piston surface (K2) with hydraulic fluid.

9. Method according to claim 8, **characterized by:**
- producing two substantially unworked processing strips (B) spaced transversely to the direction of travel (F) and/or
- bringing a plurality of working elements (3) into the raised protection position, preferably during a transport journey and/or a turning process.

10. Method according to either claim 8 or claim 9, **characterized by** the following step:
- working agricultural soils while at least one working element (3) is at least temporarily, preferably permanently, in the raised protection position.

## Revendications

1. Appareil de travail du sol (2) qui est réalisé sous forme de cultivateur (2), comportant des éléments de travail (3) réalisés sous forme de dents de cultivateur (3) pour l'ameublissement ou le scalpage de sols agricoles, dans lequel les éléments de travail (3) sont disposés sur un cadre (4) transversalement au sens de déplacement (F) de l'appareil de travail du sol (2), les uns à côté des autres et de manière à être espacés les uns derrière les autres en une ou plusieurs rangées, dans lequel les éléments de travail (3) sont disposés sur le cadre (4) de manière à pouvoir pivoter verticalement par l'intermédiaire d'au moins un axe transversal (Q) et peuvent, lors de la rencontre d'obstacles dans le sens opposé au sens de déplacement (F), s'écarter dans une position de protection relevée à l'encontre de la force de respectivement un moyen de protection contre la surcharge (5), dans lequel les moyens de protection contre la surcharge (5) sont réalisés sous forme de vérins hydrauliques (5Z) et au moins un accumulateur hydraulique (6) est associé à au moins une première surface de piston (K1) des vérins hydrauliques (5Z), dans lequel un dispositif de commande hydraulique est prévu, lequel est configuré pour solliciter une seconde surface de piston (K2) d'au moins un vérin hydraulique (5Z) opposée à la première surface de piston (K1) par un fluide hydraulique sous pression, afin d'amener l'élément de travail (3) associé audit vérin hydraulique (5Z) dans la position de protection relevée, dans lequel l'appareil de travail du sol présente un mécanisme de roulement (7) articulé de manière à pouvoir pivoter hydrauliquement sur le cadre (4), et dans lequel l'appareil de travail du sol (2) comprend une fonction activée hydrauliquement, dans lequel la fonction activée hydrauliquement est raccordée de telle sorte que, lors de l'actionnement de la fonction, l'au moins un accumulateur hydraulique (6) et/ou le dispositif de commande sont sollicités par le fluide hydraulique sous pression, **caractérisé en ce que** le mécanisme de roulement (7) est raccordé à l'au moins un accumulateur hydraulique (6) de telle sorte que l'accumulateur hydraulique (6) est chargé par l'abaissement du mécanisme de roulement (7).

2. Appareil de travail du sol (2) selon la revendication 1,
**caractérisé en ce que** le dispositif de commande est configuré pour interrompre au moins temporairement une liaison fluidique entre l'accumulateur hydraulique (6) et la première surface de piston (K1) du vérin hydraulique (5Z) ou des vérins hydrauliques (5Z), dont la seconde surface de piston (K2) ou les secondes surfaces de piston (K2) peuvent être sollicitées par le fluide hydraulique.

3. Appareil de travail du sol (2) selon la revendication 1 ou 2,
**caractérisé par** un premier groupe (G1) de moyens de protection contre la surcharge (5) qui comprend des vérins hydrauliques (5Z) qui peuvent être sollicités par le fluide hydraulique sur la seconde surface de piston (K2) au moyen du dispositif de commande, et en particulier dans lesquels la liaison fluidique entre la première surface de piston (K1) et l'accumulateur hydraulique (6) peut être séparée au moyen du dispositif de commande, et de préférence un second groupe (G2) de moyens de protection contre la surcharge (5) qui comprend des vérins hydrauliques (5Z) qui sont hors d'une liaison active avec le dispositif de commande.

4. Appareil de travail du sol (2) selon la revendication 3,
**caractérisé en ce que** des moyens de protection contre la surcharge (5) du premier groupe (G1) sont associés à au moins deux éléments de travail (3) espacés transversalement au sens de déplacement (F), de sorte que l'appareil de travail du sol (2) est conçu pour, au moyen du dispositif de commande, produire deux bandes de traitement (B) sensiblement non travaillées, espacées transversalement au sens de déplacement (F), pendant l'ameublissement ou le scalpage de sols agricoles.

5. Appareil de travail du sol (2) selon la revendication 3 ou 4,
**caractérisé en ce que** le cadre (4) comprend une partie centrale (4M) et au moins deux parties latérales (4S) disposées sur la partie centrale (4M) au moyen de charnières comportant des axes de pivotement s'étendant dans le sens de déplacement (F), dans lequel des moyens de protection contre la surcharge (5) du premier groupe (G1) sont associés aux éléments de travail (3) disposés sur la partie centrale (4M) du cadre (4) et, de préférence, des moyens de protection contre la surcharge (5) du second groupe (G2) sont associés aux éléments de travail (3) disposés sur les parties latérales (4S).

6. Appareil de travail du sol (2) selon au moins l'une des revendications précédentes, **caractérisé en ce que** le mécanisme de roulement (7) est raccordé au dispositif de commande de telle sorte que le dispositif de commande dispose d'un fluide hydraulique sous pression par relevage du mécanisme de roulement (7).

7. Appareil de travail du sol (2) selon au moins l'une des revendications précédentes, **caractérisé en ce qu'**une pluralité de moyens de protection contre la surcharge (5), en particulier tous les moyens de protection contre la surcharge (5) du premier groupe (G1), de préférence tous les moyens de protection contre la surcharge (5), comprennent une soupape de commutation qui est conçue pour relier le vérin hydraulique (5Z) respectif au dispositif de commande d'une manière conductrice de fluide et/ou pour le séparer du dispositif de commande.

8. Procédé permettant l'ameublissement ou le scalpage de sols agricoles au moyen d'un appareil de travail du sol (2) selon au moins l'une des revendications 1 à 7, **caractérisé par** l'étape consistant à :
- amener au moins un élément de travail (3) dans une position de protection relevée au moyen d'un dispositif de commande hydraulique qui sollicite par un fluide hydraulique, sur une seconde surface de piston (K2), un moyen de protection contre la surcharge (5) de l'élément de travail (3), lequel moyen est réalisé sous forme de vérin hydraulique (5Z) et maintient l'élément de travail (3) de manière à ce qu'il puisse s'écarter sur le cadre (4) et pivoter verticalement autour d'un axe transversal (Q) à l'encontre d'une force.

9. Procédé selon la revendication 8, **caractérisé par :**
- la production de deux bandes de traitement (B) sensiblement non travaillées et espacées transversalement au sens de déplacement (F) et/ou
- le fait d'amener une pluralité d'éléments de travail (3) dans la position de protection relevée, de préférence pendant un trajet de transport et/ou un processus de retournement.

10. Procédé selon la revendication 8 ou 9, **caractérisé par** l'étape consistant à :
- traiter des sols agricoles pendant qu'au moins un élément de travail (3) se trouve au moins temporairement, de préférence en permanence, dans la position de protection relevée.
